# EUROPEAN PATENT SPECIFICATION

(11) **EP 1 743 497 B1**
(45) Date of publication and mention of the grant of the patent: **30.08.2017**
(21) Application number: 04809196.1
(22) Date of filing: 28.12.2004
(51) Int. Cl.: H04W 28/14

(54) **HSDPA FLOW CONTROL DATA FRAME DELAY RNC REFERENCE TIME**
HSDPA-FLUSSSTEUERDATEN-RAHMENVERZÖGERUNGS-RNC-REFERENZZEIT
TEMPS DE REFERENCE RNC DE DELAI DE TRAME DE DONNEES POUR COMMANDE DE FLUX HSDPA

(30) Priority: 05.05.2004 US 568434 P
(43) Date of publication of application: 17.01.2007
(73) Proprietor: Telefonaktiebolaget LM Ericsson (publ), 164 83 Stockholm (SE)
(72) Inventor: LUNDH, Peter, 127 61 Skärholmen (SE); KUNINGAS, Tarmo, 171 52 Solna (SE); BLOMSTERGREN, Lars, 429 32 Kullavik (SE); WALLERIUS, Roger, 433 68 Sävedalen (SE)
(74) Representative: Ericsson
(86) International application number: PCT/SE2004/002023
(87) International publication number: WO 2005/107293

(56) References cited:
- EP-A1- 1 343 282
- EP-A2- 1 432 183
- WO-A2-2005/004337
- US-A1- 2002 110 181
- "3rd Generation Partnership Project; Technical Specification Group Radio Access Network; UTRAN I ub Interface User Plane Protocols for Common Transport Channel data streams (Release 6)", 3GPP STANDARD; 3GPP TS 25.435, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.1.0, 1 March 2004 (2004-03-01), pages 1-42, XP050368924,

## Description

### BACKGROUND OF THE INVENTION

### Field of the Invention

The present invention relates in general to a third generation cellular system and, in particular, to a radio base station (RBS) that can use a delay reference timing (DRT) extension located within a received high-speed downlink shared channel (HS-DSCH) data frame to detect a buffering delay caused by buffer build ups within transport nodes that are located on a transport link (Iub and/or Iur) between a radio network controller (RNC) and the RBS.

### Description of Related Art

Today there is a high level of interest in enhancing the performance of a third generation cellular system that implements the high-speed-downlink-packet-access (HSDPA) provision of the Wideband Code Division Multiple Access (WCDMA) standard. The performance of the third generation cellular system could be enhanced if there was a way to detect buffer build ups in transport nodes that are located on a transport link (Iub) between a radio network controller (RNC) and the radio base station (RBS).

It would be desirable if the RBS could detect buffering delays in the transport nodes, because the RBS could then determine if the buffering delays are too long. If the buffering delays are too long, then this would cause an increase of the round-trip-time (RTT), which directly impacts the time it takes high-speed (HS) traffic to travel from the RNC to the RBS and back, but also the RTT between the, typical TCP, applications in the end-points. And, if the RTT is too long then this means that there is a problem with the transport link that can lead to retransmissions between the RNC and a UE (user equipment such as a mobile handset or terminal). The retransmission of information between the RNC and the UE is not desirable because it reduces the HSDPA throughput. Document 3GPP TS 25.435 V6.1.0 concerned with UTRAN Iub Interface User Plane Protocols for Common Transport Channel data streams (Release 6) discloses in details the coding of information elements in HS-DSCH data frames. Unfortunately, the traditional RBS does not have the functionality to measure a buffering delay and as such it can not take corrective action to prevent the problematical retransmissions between the RNC and UE. This shortcoming is addressed by the present invention.

### BRIEF DESCRIPTION OF THE INVENTION

In accordance with the present invention a method for detecting a problem with a transport link between a radio network controller and a radio base station in a cellular system, as set forth in claim 1, a cellular system as set forth in claim 8, a radio base station as set forth in claim 15 and a radio network controller as set forth in claim 21 are provided. Embodiments of the invention are described in the dependent claims.

The present invention includes a RBS that analyzes a DRT extension located within a received HS-DSCH data frame to detect a buffering delay that is caused because of buffer build ups in transport nodes that are located on a transport link (Iub) between a RNC and the RBS. To accomplish this, the RBS performs the following steps: (1) receives the HS-DSCH data frame which has a DRT extension; (2) measures a difference between a value in the DRT extension of the received HS-DSCH data frame and a value in an internal counter (e.g., DBT counter) when the HS-DSCH data frame was received; (3) collects previously measured differences associated with relatively short buffering delays; and (4) compares the measured difference to the previously measured differences and if the measured difference is longer than the shortest previously measured differences (or the shortest among a number of "young" reference values) plus a predetermined delay limit then a flag is set to indicate that there is a too long of a buffering delay. The RBS can also correct a problem associated with having too long of a buffering delay by reducing the bit rate of a certain high-speed (HS) user flow or by reducing the maximum bit rate for all of the HS traffic which is going to be sent by the RNC over the transport link to the RBS.

### BRIEF DESCRIPTION OF THE DRAWINGS

A more complete understanding of the present invention may be obtained by reference to the following detailed description when taken in conjunction with the accompanying drawings wherein:
FIGURE 1 is a diagram of a third generation cellular network which includes a RBS that analyzes a DRT extension located within a received HS-DSCH data frame to detect a buffering delay within the network in accordance with the present invention;
FIGURE 2 is a flowchart illustrating the basic steps of how the RBS can detect the buffering delay and then how the RBS can determine if the buffering delay is too long in accordance with the present invention;
FIGURE 3 is a diagram that illustrates in greater detail a flow control mechanism that is located in the RBS shown in FIGURE 1 which can perform the method shown in FIGURE 2 in accordance with the present invention; and
FIGURE 4 is a diagram indicating the structure of a HS-DSCH data frame which includes the DRT extension that enables the RBS and in particular the flow control mechanism to detect the buffering delay within the network in accordance with the present invention.

### DETAILED DESCRIPTION OF THE DRAWINGS

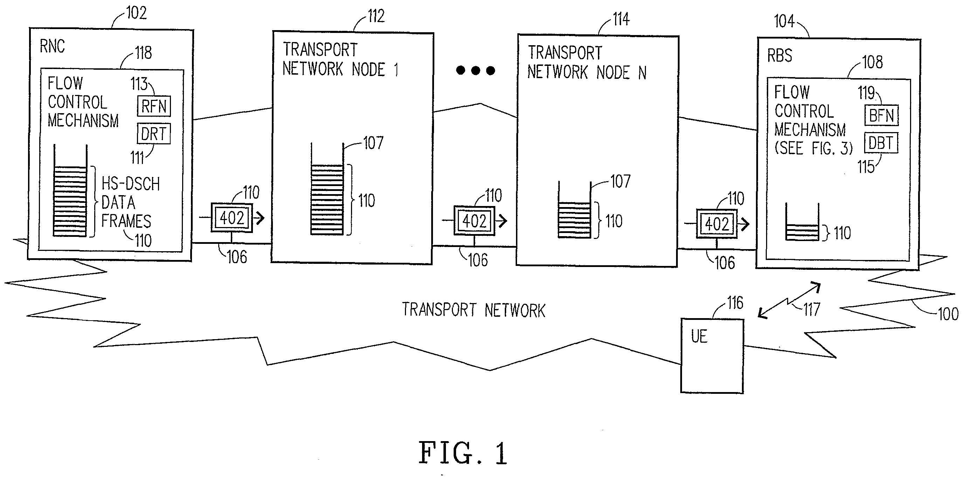

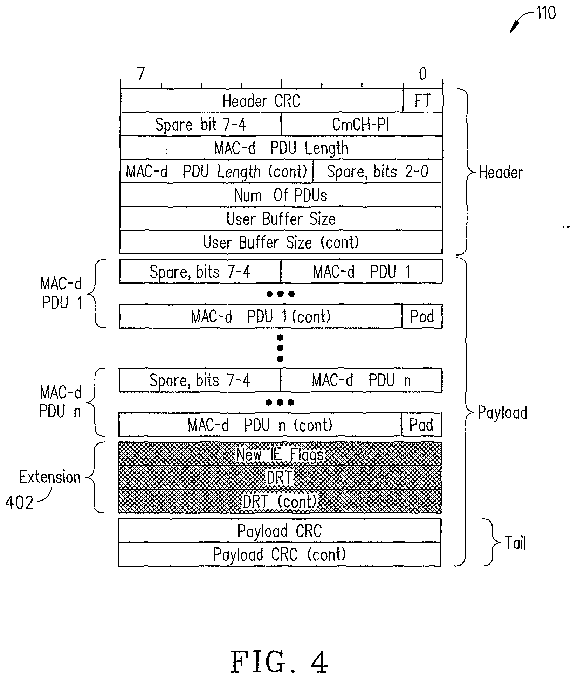

Referring to FIGURE 1, there is shown a block diagram of a third generation cellular network 100 (in particular only a UTRAN 100 (UMTS Terrestrial Radio Access Network 100 is shown) that has a RNC 102 and RBS 104 which are connected to one another via a transport link 106 (Iub 106). The RBS 104 includes a flow control mechanism 108 that analyzes a DRT extension 402 (see FIGURE 4) located within a received HS-DSCH data frame 110 to detect a buffering delay that is caused by a build-up in buffers 107 located within transport nodes 112 and 114 (only two shown) that are located on the transport link (Iub) 106 between the RNC 102 and the RBS 104. If the detected buffering delay is too long then this is problematical because the delay increases the round-trip-time (RTT), which is the time it takes frames to travel from the RNC 102 to the RBS 104 and back. And, if the RTT is too long this can lead to the retransmission of information between the RNC and a UE 116 (only one shown) which is not desirable because it reduces the HSDPA throughput.

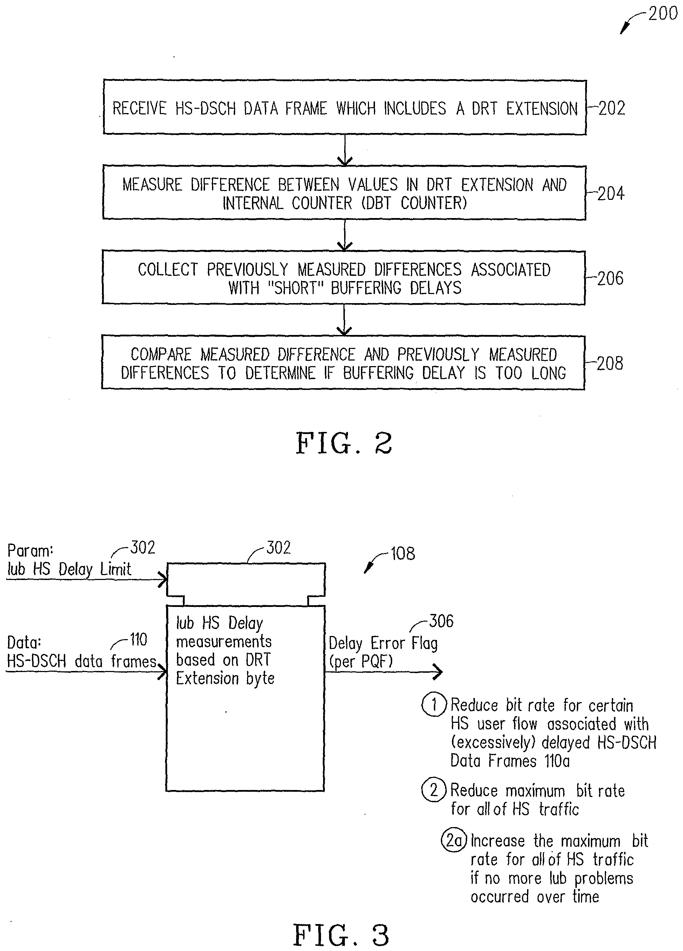

To detect a too long buffering delay, the RBS (104) can perform the following steps: (1) receive the HS-DSCH data frame 110 which has a DRT extension 402 (see step 202 in FIGURE 2); (2) measure a difference between the value in the DRT extension 402 of the received HS-DSCH data frame 110 and a value in an internal counter 115 (e.g., delay base station reference time (DBT) counter 115) when the HS-DSCH data frame 110 was received (see step 204 in FIGURE 2); (3) collect previously measured differences associated with relatively short buffering delays (see step 206 in FIGURE 2); and (4) compare the measured difference to the previously measured differences and if the measured difference is longer than the shortest previously measured differences (or the shortest among a number of "young" reference values) plus a predetermined delay limit then a flag 306 (see FIGURE 3) is set to indicate that there is a too long of a buffering delay (see step 208 in FIGURE 2). It is important that the RBS 104 has the functionality to detect a buffering delay so it can take corrective action and prevent retransmissions between the RNC 102 and a UE 116 (only one shown). A more detailed discussion about a preferred way how the RBS 104 can detect the buffering delay and the possible corrective actions which can be taken if the buffering delay is too long is provided below with respect to FIGURES 3-4.

The RBS 104 by being able to measure buffering delays enables the detection of an Iub problem in the area of HSDPA. HSDPA is a wideband radio access network (WRAN) service that utilizes the air-interface 117 in an efficient manner by implementing shorter Transmit Time Intervals (TTIs). In accordance with the HSDPA, the air-interface power that is left between dedicated channel (DCH) users e.g., voice users, and the maximum power from the RBS power amplifier can be used for HSDPA users 116 (HS users 116). For clarity, the DCH users have not been shown. Because, the HS users 116 get a service similar to best effort means that the bit rate an HS user 116 can have over the air interface 117 varies anywhere from a high bit rate (being in a cell with line of sight and with a few DCH users) to a low bit rate (being in a cell without a line of sight and with a lot of DCH users).

The HSDPA also supports a similar best effort of service for HS users 116 with respect to the transport link 106. Thus, HS-DSCH data frames 110 which are used by the HS user 116 are not admission controlled like the DCH data frames where each DCH flow has a certain bandwidth with a certain delay over the Iub 106. Instead, HS-DSCH data frames 110 which belong to one or hundreds of medium access control-d (MAC-d) flows that share the same 'best effort' type of quality of service (QoS) class over the Iub 106. It should be noted that each MAC-d flow has a queue in the RNC 102 and RBS 104. And, each MAC-d flow can compete on ATM adaptation layer 2 (AAL2) that are carried over ATM connections of type CBR, VBR, UBR, UBR+ or an IP-based transport network. If the IP-based transport is used, then the present invention is even more advantageous as it is not possible to use a CRC based congestion detection technique (as the entire packet then is lost).

Because, HS-DSCH data frames 110 use a best effort type of service on the transport link 106 means that the detection of an Iub problem that occurs due to buffering delays is important so that something can be done to correct the Iub problem. The Iub problem may be caused if there is too much HS traffic over a scarce Iub 106 and the buffers 107 in the transport nodes 112 and 114 are too long which means that HS-DSCH data frames 110 can be stored in the buffers 107 instead of being transmitted to the RBS 104. And, a delay in sending the HS-DSCH data frames 110 to the RBS 104 can increase the RTT to a point where an end-user 116 has poor throughput. This type of Iub problem can be especially problematic to end-users 116 that use Transmission Control Protocol (TCP) for the packet data service because TCP is very sensitive to long RTTs. This Iub problem can also be problematic to end-users that use real-time services like voice over IP or real-time gaming. Another possible problem caused by an increased RTT is the loss of important signaling PDUs, which are transmitted using the same best-effort transport network service. And, an extremely high HS-DSCH data frame loss ratio can cause any of these connections to be lost.

To detect this Iub problem, the present invention introduces the use of a DRT extension 402 within the HS-DSCH data frame 100 (see FIGURE 4). But, in order to accomplish this, the WCDMA RAN HSDPA hardware and software in the RNC 102 (including a flow control mechanism 118) and RBS 104 needs to be prepared for the introduction and use of the DRT extension 402 within the HS-DSCH data frame structure. One way this can be done is described next.

Referring to FIGURE 3, there is a block diagram that is used to help describe how the RBS 104 and in particular the flow control mechanism 108 can measure a buffering delay by analyzing the DRT extension 402 located within a received HS-DSCH data frame 110. As shown, the flow control mechanism 108 (frame handler 302) has two inputs: (1) Iub HS Delay Limit (per RBS) 304; and (2) HS-DSCH data frame 110. And, one output: (1) Delay Error Flag 306 (per priority queue flow (PQF per 100 ms)). However, prior to describing a preferred way for calculating the buffering delay, a brief discussion is provided next to describe the various counters that can be used by the RNC 102 and the RBS 104 which are used to help to determine if there is a buffering delay.

In the preferred embodiment, each HS-DSCH data frame 110 that includes the DRT extension 402 can be sent by the RNC 102 every frame, or e.g. 10 times a second. And, the DRT extension 402 can have a value with a 1 ms time span which can be generated by a 1 ms counter 111 (DRT counter 111) that is associated with a 10 ms RNC frame number counter 113 (RFN counter 113) located in the RNC 102. The RFN counter 113 has been standardized in 3GPP 25.402. Upon receiving the HS-DSCH data frame 110, the RBS 104 compares the reference in the DRT extension 402 with the same type of reference which can be derived from a 1 ms counter 115 (delay base station reference time (DBT) counter 115) that is associated with a 10 ms counter 119 (Node B frame number (BFN) counter 119). The BFN counter 119 has also been standardized in 3GPP 25.402. As such, the RNC 102 in the preferred embodiment contains the 1 ms DRT counter 111 and the 10 ms standardized RFN counter 113. And, the RBS 104 in the preferred embodiment contains the 1 ms DBT counter 115 and the 10 ms standardized BFN counter 119. The DRT counter 111 and the DBT counter 115 can have a range of 0-40959. While, the RFN counter 113 and BFN counter 119 can have a range of 0-4095.

In view of the foregoing, the following method can be used to determine if there is a buffering delay on the transport link 106 in the transport network 100.
1. Delay is learned by the RBS 104 (and for each PQF) by receiving HS-DSCH data frames 110 containing the DRT extension 402 and then by measuring the delay (which is just a difference figure, the figure has no absolute value at all).
2. New Delay = (DBT -DRT) Modulo 20480. (If the HS-DSCH data frame 110 arrives later, then the DBT becomes bigger and the delay becomes longer.)
3. Each Measured Delay is called New Delay.
4. If Short Delay is not yet defined, Short Delay = New Delay.
5. If (New Delay < Short Delay) Mod 20480, then update Short Delay with New Delay.
6. Collect the 4 Shortest Delays which are not older than 60 seconds. If one of the Shortest Delays are older than 60 seconds, drop it and collect a new Short Delay that qualifies as one of the 4 Shortest Delays. The reason this would be done is to avoid RNC and RBS network sync timing drift problems.
7. If New Delay is longer than Shortest Delays + Delay Limit for a given 100 ms time period, then the DelayErrorFlag 308 is set to one.
8. Keep measuring Delay and update Shortest Delays during the PQF life.
9. When PQF is terminated, e.g. at an Activation Time Cell change or at an HS radio access bearer (RAB) Deletion, the measurements stop.

As can be seen, this method is related to the general calculation process described above with respect to FIGURE 2. How the RBS 104 can correct the Iub problem when the buffering delay is too long is described next. In the preferred embodiment, if the buffering delay is too long, then the RBS 104 and in particular a frame handler 302 outputs the set DelayErrorFlag 308. In response to receiving the set DelayErrorFlag 308, the flow control mechanism 108 can temporarily decrease the bit rate (CARate) for the particular priority queue flow (PQF) of HS-DSCH data frames 110 (see numeral "1" in FIGURE 3). The RBS 104 can temporarily decrease the bit rate of a certain flow of HS-DSCH data frames 110 by sending a CA message (not shown) to the RNC 102. And, if the measured delays are too long over a period of time, then the RBS 104 could lower the maximum bit rate (TargetHSRate) for all of the HS traffic sent over the Iub 106 (see numeral "2" in FIGURE 3). Thereafter, if no more Iub problems have occurred over a period of time (10 s), then the RBS 104 could increase the maximum bit rate (TargetHSRate) for the HS traffic (see numeral "2a" in FIGURE 3).

Referring to FIGURE 4, there is a block diagram that indicates the structure of the HS-DSCH data frame 110 which includes the DRT extension 402 in accordance with the preferred embodiment of the present invention. If the DRT extension 402 was introduced into the HS-DSCH data frame 110, then the following *"italicized"* changes indicated below may be made to section 6.2.7 "Coding of Information Elements in Data Frames" in standard 3GPP TS 25.435 (version 5).

### 6.2.7.1 Header CRC

Description: Cyclic Redundancy Checksum calculated on the header of a data frame with polynom: X^7+X^6+X^2+1. The CRC calculation shall cover all bits in the header, starting from bit 0 in the first byte (FT field) up to the end of the header.

Value range: {0..127}.

Field length: 7 bits.

### 6.2.7.2 Frame Type

Description: Describes if it is a control frame or a data frame.

Value range: {0=data, 1=control}.

Field Length: 1 bit.

### 6.2.7.3 Connection Frame Number (CFN)

Description: Indicator as to which radio frame the first data was received on uplink or shall be transmitted on downlink. The value range and field length depend on the transport channel for which the CFN is used.

Value range (PCH): {0..4095}.

Value range (other): {0..255}.

Field length (PCH): 12 bits.

Field length (other): 8 bits.

### 6.2.7.4 Transport Format Indicator

Description: TFI is the local number of the transport format used for the transmission time interval.

Value range: {0..31}.

Field length: 5 bits.

### 6.2.7.5 Propagation Delay [FDD]

Description: One-way radio interface delay as measured during RACH access.

Value range: {0..765 chips}.

Granularity: 3 chips.

Field length: 8 bits.

### 6.2.7.6 Rx Timing Deviation [3.84Mcps TDD]

Description: Measured Rx Timing Deviation as a basis for timing advance. This value should consider measurements made in all frames and all timeslots that contain the transport blocks in the payload. In case the Timing Advance Applied IE indicates "No" in a cell, the Rx Timing Deviation field shall be set to N = 0.

Value range: {-256 .. +256 chips}.

{N*4 -256} chips ≤ RxTiming Deviation < {(N+1)*4 - 256} chips. With N = 0, 1, .., 127.

Granularity: 4 chips.

Field length: 7 bits.

### 6.2.7.6A Received SYNC UL Timing Deviation [1.28Mcps TDD]

Description: Measured Received SYNC UL Timing Deviation as a basis for propagation delay.

Value range: {0, .., +256} chips

Granularity: 1 chip.

Field length: 8 bits.

### 6.2.7.7 Transport Block

Description: A block of data to be transmitted or have been received over the radio interface. The transport format indicated by the TFI describes the transport block length and transport block set size.

### 6.2.7.8 CRC Indicator

Description: Shows if the transport block has a correct CRC. The UL Outer Loop Power Control may use the CRC indication.

Value range: {0=Correct, 1=Not Correct}.

Field length: 1 bit.

### 6.2.7.9 Payload CRC

Description: Cyclic Redundancy Checksum calculated on the payload of a data frame with polynom X^l6+X^15+X^2+1. The CRC calculation shall cover all bits in the data frame payload, starting from bit 7 in the first byte up to bit 0 in the byte before the payload CRC.

Field length: 16 bits.

### 6.2.7.10 Transmit Power Level

Description: Preferred transmission power level during this TTI for the corresponding transport channel. The indicated value is the negative offset relative to the maximum power configured for the physical channel(s) used for the respective transport channel. [1.28Mcps TDD - The RBS shall ignore the Transmit Power Level in the TDD DSCH DATA FRAME.] [3.84Mcps TDD - The RBS shall ignore the Transmit Power Level in the TDD DSCH DATA FRAME if closed loop TPC power control is used.]

Value range: {0 .. 25.5 dB}.

Granularity: 0,1 dB.

Field length: 8 bits.

### 6.2.7.11 Paging Indication (PI)

Description: Describes if the PI Bitmap is present in the payload.

Value range: {0=no PI-bitmap in payload, 1=PI-bitmap in payload}.

Field length: 1 bit.

### 6.2.7.12 Paging Indication bitmap (PI-bitmap)

Description: Bitmap of Paging Indications PI₀..PI_{N-1}. Bit 7 of the first byte contains PI0, Bit6 of the first byte contains PI1,,..., Bit7 of the second byte contains PI8 and so on.

Value range: [FDD - {18, 36, 72 or 144 Paging Indications}.]
[3.84Mcps TDD - {30, 34, 60, 68, 120 and 136} Paging Indications for 2 PICH frames, {60, 68, 120, 136, 240 and 272} Paging Indications for 4 PICH frames].
[1.28Mcps TDD - {44, 88 and 176} Paging Indications for 2 PICH frames, {88, 176 and 352} Paging Indications for 4 PICH frames].

Field length: [FDD - 3, 5, 9 or 18 bytes (the PI-bitmap field is padded at the end up to an octet boundary)].
[3.84Mcps TDD - 4, 5, 8, 9, 15, 17, 30 or 34 bytes (the PI-bitmap field is padded at the endup to an octet boundary)].
[1.28Mcps TDD - 6, 11, 22 or 44 bytes (the PI-bitmap field is padded at the endup to an octet boundary)].

### 6.2.7.13 Rx Timing Deviation on RACH [3.84Mcps TDD]

Void.

### 6.2.7.14 PDSCH Set Id [TDD]

Description: A pointer to the PDSCH Set which shall be used to transmit the DSCH DATA FRAME over the radio interface.

Value range: {0..255}.

Field length: 8 bits.

### 6.2.7.15 Code Number [FDD]

Description: The code number of the PDSCH (the same mapping is used as for the 'code number' IE).

Value Range: {0..255}.

Field length: 8 bits.

### 6.2.7.16 Spreading Factor (SF) [FDD]

Description: The spreading factor of the PDSCH. Spreading factor = 0 Spreading factor to be used = 4.

Spreading factor = 1 Spreading factor to be used = 8.

Spreading factor = 6 Spreading factor to be used = 256.

Value Range: {4,8,16,32,64,128, 256}.

Field length: 3 bits.

### 6.2.7.17 Power Offset [FDD]

Description: Used to indicate the preferred FDD PDSCH transmission power level. The indicated value is the offset relative to the power of the TFCI bits of the downlink DPCCH directed to the same UE as the DSCH.

Power offset = 0 Power offset to be applied = -32 dB.

Power offset = 1 Power offset to be applied = -31.75 dB.

Power offset = 255 Power offset to be applied = +31.75 dB.

Value range: {-32 .. +31.75 dB}.

Granularity: 0.25 dB.

Field length: 8 bits.

### 6.2.7.18 MC Info [FDD]

Description: Used to indicate the number of parallel PDSCH codes on which the DSCH data will be carried. Where multi-code transmission is used the SF of all codes is the same and code numbers are contiguous within the code tree with increasing code number values starting from the code number indicated in the 'code number' field.

Value range: {1..16}.

Field length: 4 bits.

### 6.2.7.19 Spare Extension

Description: Indicates the location where new IEs can in the future be added in a backward compatible way.

Field length: 0-32 octets.

### 6.2.7.20 Quality Estimate (QE) [TDD]

Description: The quality estimate is derived from the Transport channel BER. If the USCH FP frame includes TB's for the USCH then the QE is the Transport channel BER for the selected USCH. If no Transport channel BER is available the QE shall be set to 0. The quality estimate shall be set to the Transport channel BER and be measured in the units TrCH_BER_LOG respectively. The UL Outer Loop Power Control may use the quality estimate.

Value range: {0..255}.

Granularity: 1.

Field length: 8 bits.

### 6.2.7.21 Common Transport Channel Priority Indicator (CmCH-PI)

Description: CmCH-PI, configured via the Scheduling Priority Indicator in NBAP, is the relative priority of the data frame and the SDUs included.

Value range: {0-15, where 0=lowest priority, 15=highest priority}.

Field length: 4 bits.

### 6.2.7.22 User Buffer Size

Description: Indicates the users' buffer size (i.e. the amount of data in the buffer) in octets for a given Common Transport Channel Priority Indicator level.

Value range: {0-65535}.

Field length: 16 bits.

### 6.2.7.23 MAC-d PDU Length

Description: The value of that field indicates the length of every MAC-d PDU in the payload of the HS-DSCH DATA FRAME in number of bits.

Value range: {0-5000}.

Field Length: 13 bits.

### 6.2.7.24 NumOfPDU

Description: Indicates the number of MAC-d PDUs in the payload.

Value range: {1-255}.

Field Length: 8 bits.

### 6.2.7.25 MAC-d PDU

Description: A MAC-d PDU contains the MAC-d PDU.

Field length: See the value of the MAC-d PDU Length IE.

### 6.2.7.26 Cell Portion ID [FDD]

Description: Cell Portion ID indicates the cell portion with highest SIR during RACH access. Cell Portion ID is configured by O&M.

Value range: {0-63}.

Field Length: 6 bits.

### 6.2.7.27 New IE Flags

Description: Contains flags indicating which information is valid in the fields following the New IE Flags IE. The last bit position of the New IE Flags IE is used as the Extension Flag to allow the extension of the New IE Flags IE in the future.

Value range:
Bit 0-6: Indicates if the bytes following the New IE Flags IE contains a valid data (1) or not (0). The meaning of each bit is explained in the corresponding DATA FRAME subclause;
Bit7: Indicates if the 1^{st} byte following the New IE Flags IE and the corresponding IEs has additional New IE Flags IE (1) or not (0).

Field length: 8 bits.

### 6. 2. 7. x DRT (Delay RNC reference Time)

*Description: DRT is a 16-bit Delay RNC reference Time. DRT could be used for HSDPA HS-DSCH data frames buffer delay measurements. The DRT counter bridges the same time span as RFN and BFN (TS 25.402). DRT is locked to RFN in SRNC and is a 40960 counter with 1 ms resolution.*

*Value range: {0..40959_{DEC} ms (0.. 9FFF_{HE}x ms)}.*

*Granularity: 1 ms.*

*Field length: 16 bits.*

It should be appreciated that without the addition of the DRT extension 402 then the structure of the HS-DSCH data frame 110 shown in FIGURE 4 and described above would correspond to a traditional HS-DSCH data frame. For a more detailed discussion about the traditional HS-DSCH data frame, HSDPA and WCDMA reference is made to the following standards:
- 3GPP, TS 25.435, Iub User plane for common channels.
- 3GPP, TS 25.425, Iur User plane for common channels.
- 3GPP, TS 25.402

Following are some additional features, advantages and uses of the present invention:
- The present invention makes it possible for the RBS Flow Control Algorithm to detect Iub congestion in a better way and to improve the cell change characteristics.
- It should be appreciated that an Iub problem can be caused if there is too much HS traffic over a scarce Iub 106 which means that HS-DSCH data frames 110 are going to be stored in the buffers of the transport nodes 112 and 114. And, if the buffers in the transport nodes 112 and 114 are too long then this problem is addressed by the present invention. However, if the buffers in the transport nodes 112 and 114 are too small then this can lead to another problem associated with dropped HS-DSCH data frames 110.
- It should be noted that certain details associated with the components within the third generation cellular network 100 like the RNC 102 and RBS 104 are well known in the industry. Therefore, for clarity, the description provided above in relation to the RNC 102 and RBS 104 omits those well known details that are not necessary to understand the present invention.
- It should be noted that the 'DRT' time-stamp information can also be sent using a Control Frame (3GPP TS 25.435) carrying the same type of information as specified in the HS-DSCH Data Frame. The Control Frame could be sent by the RNC regularly in the same way as extending the Data Frames with the DRT extension regularly.
- It should be noted that the RNC and RBS also have buffers that can add to the buffering delays in the transmission of HS-DSCH data frames in addition to the buffering delays caused by the buffers in the transport nodes.
The invention and its embodiments are not limited to the examples described in this specification but may vary within the scope of the appended claims.

## Claims

1. A method (200) for detecting a problem with a transport link (106) between a radio network controller (102) and a radio base station (104) in a cellular system (100), said method (200) **characterized by** the step of:
receiving at the radio base station (104) a high-speed downlink shared channel, HS-DSCH, data frame (110), generated and transmitted by the radio network controller (102), the HS-DSCH data frame (110) including a delay reference timing, DRT, extension (402), and using at the radio base station (104) a value in the DRT extension (402) to detect a buffering delay caused by buffers (107) in transport nodes (112, 114) located on the transport link (106) between said radio network controller (102) and said radio base station (104).

2. The method of Claim 1, wherein said DRT extension has a resolution of 1 ms and is derived from a counter (111) in a radio network controller.

3. The method of Claim 1, wherein said buffering delays are detected by performing the following steps:
receiving (202), at said radio base station, the HS-DSCH data frame with the DRT extension;
measuring (204), at said radio base station, a difference between a value in the DRT extension of the HS-DSCH data frame and a value in a counter (115) in the radio base station when the HS-DSCH data frame was received by said radio base station;
collecting (206), at said radio base station, a plurality of previously measured differences associated with relatively short buffering delays caused by the buffers in the transport nodes located between said radio network controller and said radio base station; and
comparing (208), at said radio base station, the measured difference to the previously measured differences and if the measured difference is longer than the shortest previously measured difference plus a predetermined delay limit then a flag (306) is set to indicate that there is a problematical buffering delay on the transport link between said radio network controller and said radio base station.

4. The method of Claim 3, wherein said step of collecting the plurality of previously measured differences is further **characterized by** the step of dropping and not using previously measured differences that were obtained before a predetermined time so as to avoid node phase drift problems.

5. The method of Claim 1, wherein if the detected buffering delay is above a predetermined threshold, then said radio base station sends a message to said radio network controller instructing said radio network controller to decrease a bit rate of a priority queue flow, PQF, associated with a plurality of the HS-DSCH data frames.

6. The method of Claim 1, wherein if the detected buffering delay is above a predetermined threshold, then said radio base station sends a message to said radio network controller instructing said radio network controller to decrease a maximum bit rate for all HS traffic which is sent over said transport link to said radio base station.

7. The method of Claim 6, wherein said radio base station increases the maximum bit rate for the HS traffic after a predetermined period of time during which subsequent detected buffering delays have not exceeded a predetermined threshold.

8. A cellular system (100), including:
a radio network controller (102);
a transport link (106); and
a radio base station (104), the cellular system being **characterized in that**
said radio network controller (102) is configured to generate a high-speed downlink shared channel, HS-DSCH, data frame (110) that includes a delay reference timing, DRT, extension (402),
said radio network controller (102) is configured to transmit the HS-DSCH data frame (110) over said transport link (106) to said radio base station (104),
said radio base station (104) is configured to receive the HS-DSCH data frame (110), and
said radio base station (104) is configured to use a value in the DRT extension (402) to detect a buffering delay caused by buffers (107) in transport nodes (112, 114) located on the transport link (106) between said radio network controller (102) and said radio base station (104).

9. The cellular system of Claim 8, wherein said DRT extension has a resolution of 1 ms and is derived from a counter in said radio network controller.

10. The cellular system of Claim 8, wherein said radio base station is configured to detect the buffering delay by performing the following steps:
measuring (204) a difference between the value in the DRT extension of the HS-DSCH data frame and a value in a counter (115) in said radio base station when the HS-DSCH data frame was received by said radio base station;
collecting (206) a plurality of previously measured differences associated with relatively short buffering delays caused by the buffers in the transport nodes located between said radio network controller and said radio base station; and
comparing (208) the measured difference to the previously measured differences and if the measured difference is longer than the shortest previously measured difference plus a predetermined delay limit then a flag (306) is set to indicate that there is a problematical buffering delay on the transport link between said radio network controller and said radio base station.

11. The cellular system of Claim 10, wherein said step of collecting the plurality of previously measured differences is further **characterized by** the step of dropping and not using previously measured differences that were obtained before a predetermined time so as to avoid node phase drift problems.

12. The cellular system of Claim 8, wherein if the detected buffering delay is above a predetermined threshold, then said radio base station sends a message to said radio network controller instructing said radio network controller to decrease a bit rate of a priority queue flow, PQF, associated with a plurality of the HS-DSCH data frames.

13. The cellular system of Claim 8, wherein if the detected buffering delay is above a predetermined threshold, then said radio base station sends a message to said radio network controller instructing said radio network controller to decrease a maximum bit rate for all HS traffic which is sent over said transport link to said radio base station.

14. The cellular system of Claim 13, wherein said radio base station is configured to increase the maximum bit rate for the HS traffic after a predetermined period of time during which subsequent detected buffering delays have not exceeded a predetermined threshold.

15. A radio base station (104), **characterized by**:
a flow control mechanism (108) which is configured to receive a high-speed downlink shared channel, HS-DSCH, data frame (110), generated and transmitted by a radio network controller (102), the HS-DSCH data frame (110) including a delay reference timing, DRT, extension (402) and then to use a value in the DRT extension (402) to detect a buffering delay caused by buffers (107) in transport nodes (112, 114) located on a transport link (106) between the radio network controller (102) and the radio base station (104).

16. The radio base station of Claim 15, wherein said flow control mechanism is configured to detect the buffering delay by performing the following steps:
measuring (204) a difference between the value in the DRT extension of the HS-DSCH data frame and a value in a counter (115) when the HS-DSCH data frame was received;
collecting (206) a plurality of previously measured differences associated with relatively short buffering delays caused by buffers (107) in transport nodes (112 and 114) located in the transport network;
comparing (208) the measured difference to the previously measured differences and if the measured difference is longer than the shortest previously measured difference plus a predetermined delay limit then a flag (306) is set to indicate that there is a problematical buffering delay within the transport network.

17. The radio base station of Claim 15, wherein said flow control mechanism while collecting the previously measured differences drops and not is configured to uses previously measured differences that were obtained before a predetermined time so as to avoid node phase drift problems.

18. The radio base station of Claim 15, wherein if the detected buffering delay is above a predetermined threshold, then said flow control mechanism sends a message to a radio network controller (102) instructing said radio network controller to decrease a bit rate of a priority queue flow, PQF, associated with a plurality of the HS-DSCH data frames.

19. The radio base station of Claim 15, wherein if the detected buffering delay is above a predetermined threshold, then said flow control mechanism sends a message to a radio network controller (102) instructing said radio network controller to decrease a maximum bit rate for all HS traffic which is sent over a transport link (106) to said flow control mechanism.

20. The radio base station of Claim 19, wherein said flow control mechanism is configured to increase the maximum bit rate for the HS traffic after a predetermined period of time during which subsequent detected buffering delays have not exceeded a predetermined threshold.

21. A radio network controller (102), **characterized by**:
a flow control mechanism (108) which is configured to generate a high-speed downlink shared channel, HS-DSCH, data frame (110) that includes a delay reference timing, DRT, extension (402), and to transmit the HS-DSCH data frame to a radio base station (104), whereby the use of a value in the DRT extension introduced into the HS-DSCH by the radio network controller (102) enables the radio base station (104) to detect a buffering delay caused by buffers (107) in transport nodes (112, 114) located on a transport link (106) between the radio network controller (102) and the radio base station (104).

22. The radio network controller of Claim 21, wherein said flow control mechanism is configured to add the DRT extension only to a portion of the generated HS-DSCH data frames.

23. The radio network controller of Claim 21, wherein said DRT extension has a resolution of 1 ms and is derived from an internal counter (111) .

## Patentansprüche

1. Verfahren (200) zum Erkennen eines Problems mit einer Transportverbindung (106) zwischen einer Funknetzsteuerung (102) und einer Funkbasisstation (104) in einem Mobilfunksystem (100), wobei das Verfahren (200) **gekennzeichnet ist durch** den folgenden Schritt:
Empfangen eines durch die Funknetzsteuerung (102) erzeugten und gesendeten High-Speed Downlink Shared Channel, HS-DSCH-, Datenrahmens (110) an der Funkbasisstation (104), wobei der HS-DSCH-Datenrahmen (110) eine Delay Reference Timing, DRT-, Erweiterung (402) aufweist, und Verwenden eines Wertes in der DRT-Erweiterung (402) an der Funkbasisstation (104), um eine durch Zwischenspeicher (107) in auf der Transportverbindung (106) zwischen der Funknetzsteuerung (102) und der Funkbasisstation (104) befindlichen Transportknoten (112, 114) verursachte Zwischenspeicherungsverzögerung zu erkennen.

2. Verfahren nach Anspruch 1, wobei die DRT-Erweiterung eine Auflösung von 1 ms aufweist und aus einem Zähler (111) in einer Funknetzsteuerung abgeleitet wird.

3. Verfahren nach Anspruch 1, wobei die Zwischenspeicherungsverzögerungen mittels Durchführen der folgenden Schritte erkannt werden:
Empfangen (202) des HS-DSCH-Datenrahmens mit der DRT-Erweiterung an der Funkbasisstation,
Messen (204), an der Funkbasisstation, einer Differenz zwischen einem Wert in der DRT-Erweiterung des HS-DSCH-Datenrahmens und einem Wert in einem Zähler (115) in der Funkbasisstation, wenn der HS-DSCH-Datenrahmen von der Funkbasisstation erhalten wurde,
Sammeln (206), an der Funkbasisstation, einer Vielzahl zuvor gemessener Differenzen, die mit relativ kurzen Zwischenspeicherungsverzögerungen verbunden sind, die durch die Zwischenspeicher in den zwischen der Funknetzsteuerung und der Funkbasisstation befindlichen Transportknoten verursacht wurden, und
Vergleichen (208), an der Funkbasisstation, der gemessenen Differenz mit den zuvor gemessenen Differenzen und, falls die gemessene Differenz länger ist als die kürzeste zuvor gemessene Differenz plus ein vorab bestimmtes Verzögerungslimit, wird eine Markierung (306) gesetzt, um anzuzeigen, dass auf der Transportverbindung zwischen der Funknetzsteuerung und der Funkbasisstation eine problematische Zwischenspeicherungsverzögerung vorliegt.

4. Verfahren nach Anspruch 3, wobei der Schritt des Sammelns der Vielzahl zuvor gemessener Differenzen ferner **gekennzeichnet ist durch** den Schritt des Verwerfens und Nichtverwendens zuvor gemessener Differenzen, die vor einer vorab bestimmten Zeit bezogen wurden, um Probleme hinsichtlich Knotenphasendrift zu vermeiden.

5. Verfahren nach Anspruch 1, wobei die Funkbasisstation eine Nachricht an die Funknetzsteuerung sendet, mit der sie die Funknetzsteuerung anweist, eine Bitrate eines mit einer Vielzahl der HS-DSCH-Datenrahmen verbundenen Vorrangwarteschlangen-Flusses (Priority Queue Flow), PQF, zu verringern, falls die erkannte Zwischenspeicherungsverzögerung über einem vorab bestimmten Schwellenwert liegt.

6. Verfahren nach Anspruch 1, wobei die Funkbasisstation eine Nachricht an die Funknetzsteuerung sendet, mit der sie die Funknetzsteuerung anweist, eine maximale Bitrate für den gesamten über die Transportverbindung an die Funkbasisstation gesendeten HS-Verkehr zu verringern, falls die erkannte Zwischenspeicherungsverzögerung über einem vorab bestimmten Schwellenwert liegt.

7. Verfahren nach Anspruch 6, wobei nach einem vorab bestimmten Zeitraum, während dessen nachfolgende erkannte Zwischenspeicherungsverzögerungen einen vorab bestimmten Schwellenwert nicht überschritten haben, die Funkbasisstation die maximale Bitrate für den HS-Verkehr erhöht.

8. Mobilfunksystem (100), aufweisend:
eine Funknetzsteuerung (102),
eine Transportverbindung (106) und
eine Funkbasisstation (104), wobei das Mobilfunksystem **dadurch gekennzeichnet ist, dass**
die Funknetzsteuerung (102) dafür konfiguriert ist, einen High-Speed Downlink Shared Channel, HS-DSCH-, Datenrahmen (110) zu erzeugen, der eine Delay Reference Timing, DRT-, Erweiterung (402) aufweist,
die Funknetzsteuerung (102) dafür konfiguriert ist, den HS-DSCH-Datenrahmen (110) über die Transportverbindung (106) an die Funkbasisstation (104) zu senden,
die Funkbasisstation (104) dafür konfiguriert ist, den HS-DSCH-Datenrahmen (110) zu empfangen und
die Funkbasisstation (104) dafür konfiguriert ist, einen Wert in der DRT-Erweiterung (402) zu verwenden, um eine durch Zwischenspeicher (107) in auf der Transportverbindung (106) zwischen der Funknetzsteuerung (102) und der Funkbasisstation (104) befindlichen Transportknoten (112, 114) verursachte Zwischenspeicherungsverzögerung zu erkennen.

9. Mobilfunksystem nach Anspruch 8, wobei die DRT-Erweiterung eine Auflösung von 1 ms aufweist und aus einem Zähler in der Funknetzsteuerung abgeleitet ist.

10. Mobilfunksystem nach Anspruch 8, wobei die Funkbasisstation dafür konfiguriert ist, die Zwischenspeicherungsverzögerung mittels Durchführen der folgenden Schritte zu erkennen:
Messen (204) einer Differenz zwischen dem Wert in der DRT-Erweiterung des HS-DSCH-Datenrahmens und einem Wert in einem Zähler (115) in der Funkbasisstation, wenn der HS-DSCH-Datenrahmen von der Funkbasisstation erhalten wurde,
Sammeln (206) einer Vielzahl zuvor gemessener Differenzen, die mit relativ kurzen Zwischenspeicherungsverzögerungen verbunden sind, die durch die Zwischenspeicher in den zwischen der Funknetzsteuerung und der Funkbasisstation befindlichen Transportknoten verursacht wurden, und
Vergleichen (208) der gemessenen Differenz mit den zuvor gemessenen Differenzen und, falls die gemessene Differenz länger ist als die kürzeste zuvor gemessene Differenz plus ein vorab bestimmtes Verzögerungslimit, wird eine Markierung (306) gesetzt, um anzuzeigen, dass auf der Transportverbindung zwischen der Funknetzsteuerung und der Funkbasisstation eine problematische Zwischenspeicherungsverzögerung vorliegt.

11. Mobilfunksystem nach Anspruch 10, wobei der Schritt des Sammelns der Vielzahl zuvor gemessener Differenzen ferner **gekennzeichnet ist durch** den Schritt des Verwerfens und Nichtverwendens zuvor gemessener Differenzen, die vor einer vorab bestimmten Zeit bezogen wurden, um Probleme hinsichtlich Knotenphasendrift zu vermeiden.

12. Mobilfunksystem nach Anspruch 8, wobei die Funkbasisstation eine Nachricht an die Funknetzsteuerung sendet, mit der sie die Funknetzsteuerung anweist, eine Bitrate eines mit einer Vielzahl der HS-DSCH-Datenrahmen verbundenen Vorrangwarteschlangen-Flusses (Priority Queue Flow), PQF, zu verringern, falls die erkannte Zwischenspeicherungsverzögerung über einem vorab bestimmten Schwellenwert liegt.

13. Mobilfunksystem nach Anspruch 8, wobei die Funkbasisstation eine Nachricht an die Funknetzsteuerung sendet, mit der sie die Funknetzsteuerung anweist, eine maximale Bitrate für den gesamten über die Transportverbindung an die Funkbasisstation gesendeten HS-Verkehr zu verringern, falls die erkannte Zwischenspeicherungsverzögerung über einem vorab bestimmten Schwellenwert liegt.

14. Mobilfunksystem nach Anspruch 13, wobei die Funkbasisstation dafür konfiguriert ist, nach einem vorab bestimmten Zeitraum, während dessen nachfolgende erkannte Zwischenspeicherungsverzögerungen einen vorab bestimmten Schwellenwert nicht überschritten haben, die maximale Bitrate für den HS-Verkehr zu erhöhen.

15. Funkbasisstation (104), **gekennzeichnet durch**:
einen Flusssteuerungsmechanismus (108), der dafür konfiguriert ist, einen von einer Funknetzsteuerung (102) erzeugten und gesendeten High-Speed Downlink Shared Channel, HS-DSCH-, Datenrahmen (110) zu empfangen, wobei der HS-DSCH-Datenrahmen (110) eine Delay Reference Timing, DRT-, Erweiterung (402) aufweist, und dann einen Wert in der DRT-Erweiterung (402) zu verwenden, um eine durch Zwischenspeicher (107) in auf der Transportverbindung (106) zwischen der Funknetzsteuerung (102) und der Funkbasisstation (104) befindlichen Transportknoten (112, 114) verursachte Zwischenspeicherungsverzögerung zu erkennen.

16. Funkbasisstation nach Anspruch 15, wobei der Flusssteuerungsmechanismus dafür konfiguriert ist, die Zwischenspeicherungsverzögerung mittels Durchführen der folgenden Schritte zu erkennen:
Messen (204) einer Differenz zwischen dem Wert in der DRT-Erweiterung des HS-DSCH-Datenrahmens und einem Wert in einem Zähler (115), wenn der HS-DSCH-Datenrahmen erhalten wurde,
Sammeln (206) einer Vielzahl zuvor gemessener Differenzen, die mit relativ kurzen Zwischenspeicherungsverzögerungen verbunden sind, die durch Zwischenspeicher (107) in im Transportnetz befindlichen Transportknoten (112 und 114) verursacht wurden, und
Vergleichen (208) der gemessenen Differenz mit den zuvor gemessenen Differenzen und, falls die gemessene Differenz länger ist als die kürzeste zuvor gemessene Differenz plus ein vorab bestimmtes Verzögerungslimit, wird eine Markierung (306) gesetzt, um anzuzeigen, dass innerhalb des Transportnetzes eine problematische Zwischenspeicherungsverzögerung vorliegt.

17. Funkbasisstation nach Anspruch 15, wobei während des Sammelns der zuvor gemessenen Differenzen der Flusssteuerungsmechanismus zuvor gemessene Differenzen, die vor einer vorab bestimmten Zeit bezogen wurden, verwirft und dafür konfiguriert ist, diese nicht zu verwenden, um Probleme hinsichtlich Knotenphasendrift zu vermeiden.

18. Funkbasisstation nach Anspruch 15, wobei der Flusssteuerungsmechanismus eine Nachricht an eine Funknetzsteuerung (102) sendet, mit der er die Funknetzsteuerung anweist, eine Bitrate eines mit einer Vielzahl der HS-DSCH-Datenrahmen verbundenen Vorrangwarteschlangen-Flusses (Priority Queue Flow), PQF, zu verringern, falls die erkannte Zwischenspeicherungsverzögerung über einem vorab bestimmten Schwellenwert liegt.

19. Funkbasisstation nach Anspruch 15, wobei der Flusssteuerungsmechanismus eine Nachricht an eine Funknetzsteuerung (102) sendet, mit der er die Funknetzsteuerung anweist, eine maximale Bitrate für den gesamten über eine Transportverbindung (106) an den Flusssteuerungsmechanismus gesendeten HS-Verkehr zu verringern, falls die erkannte Zwischenspeicherungsverzögerung über einem vorab bestimmten Schwellenwert liegt.

20. Funkbasisstation nach Anspruch 19, wobei der Flusssteuerungsmechanismus dafür konfiguriert ist, nach einem vorab bestimmten Zeitraum, während dessen nachfolgende erkannte Zwischenspeicherungsverzögerungen einen vorab bestimmten Schwellenwert nicht überschritten haben, die maximale Bitrate für den HS-Verkehr zu erhöhen.

21. Funknetzsteuerung (102), **gekennzeichnet durch**:
einen Flusssteuerungsmechanismus (108), der dafür konfiguriert ist, einen High-Speed Downlink Shared Channel, HS-DSCH-, Datenrahmen (110) zu erzeugen, der eine Delay Reference Timing, DRT-, Erweiterung (402) aufweist, und den HS-DSCH-Datenrahmen an eine Funkbasisstation (104) zu senden, wodurch die Verwendung eines Werts in der durch die Funknetzsteuerung (102) in den HS-DSCH eingeführten DRT-Erweiterung es der Funkbasisstation (104) ermöglicht, eine durch Zwischenspeicher (107) in auf einer Transportverbindung (106) zwischen der Funknetzsteuerung (102) und der Funkbasisstation (104) befindlichen Transportknoten (112, 114) verursachte Zwischenspeicherungsverzögerung zu erkennen.

22. Funknetzsteuerung nach Anspruch 21, wobei der Flusssteuerungsmechanismus dafür konfiguriert ist, die DRT-Erweiterung nur einem Abschnitt der erzeugten HS-DSCH-Datenrahmen hinzuzufügen.

23. Funknetzsteuerung nach Anspruch 21, wobei die DRT-Erweiterung eine Auflösung von 1 ms aufweist und aus einem internen Zähler (111) abgeleitet ist.

## Revendications

1. Procédé (200) de détection d'un problème avec une liaison de transport (106) entre un contrôleur de réseau radio (102) et une station de base radio (104) dans un système cellulaire (100), ledit procédé (200) étant **caractérisé par** l'étape ci-dessous consistant à :
recevoir, au niveau de la station de base radio (104), une trame de données de canal partagé en liaison descendante haut débit, HS-DSCH, (110), générée et transmise par le contrôleur de réseau radio (102), la trame de données de canal HS-DSCH (110) incluant une extension de temporisation de référence de délai, DRT, (402), et utiliser, au niveau de la station de base radio (104), une valeur dans l'extension de temporisation DRT (402) en vue de détecter un délai de mise en mémoire tampon occasionné par des mémoires tampons (107) dans des noeuds de transport (112, 114) situés sur la liaison de transport (106) entre ledit contrôleur de réseau radio (102) et ladite station de base radio (104).

2. Procédé selon la revendication 1, dans lequel ladite extension de temporisation DRT présente une résolution de 1 ms et est dérivée d'un compteur (111) dans un contrôleur de réseau radio.

3. Procédé selon la revendication 1, dans lequel lesdits délais de mise en mémoire tampon sont détectés en mettant en oeuvre les étapes ci-dessous consistant à :
recevoir (202), au niveau de ladite station de base radio, la trame de données de canal HS-DSCH avec l'extension de temporisation DRT ;
mesurer (204), au niveau de ladite station de base radio, une différence entre une valeur dans l'extension de temporisation DRT de la trame de données de canal HS-DSCH et une valeur dans un compteur (115) dans la station de base radio lorsque la trame de données de canal HS-DSCH a été reçue par ladite station de base radio ;
collecter (206), au niveau de ladite station de base radio, une pluralité de différences mesurées précédemment associées à des délais de mise en mémoire tampon relativement courts occasionnés par les mémoires tampons dans les noeuds de transport situés entre ledit contrôleur de réseau radio et ladite station de base radio ; et
comparer (208), au niveau de ladite station de base radio, la différence mesurée aux différences mesurées précédemment, et si la différence mesurée est plus longue que la différence mesurée précédemment la plus courte plus une limite de délai prédéterminée, alors un drapeau (306) est défini en vue d'indiquer qu'il existe un délai de mise en mémoire tampon problématique sur la liaison de transport entre ledit contrôleur de réseau radio et ladite station de base radio.

4. Procédé selon la revendication 3, dans lequel ladite étape de collecte de la pluralité de différences mesurées précédemment est en outre **caractérisée par** l'étape consistant à abandonner et à ne pas utiliser des différences mesurées précédemment qui ont été obtenues avant un temps prédéterminé, afin d'éviter des problèmes de dérive de phase de noeuds.

5. Procédé selon la revendication 1, dans lequel, si le délai de mise en mémoire tampon détecté est supérieur à un seuil prédéterminé, alors ladite station de base radio envoie un message, audit contrôleur de réseau radio, ordonnant audit contrôleur de réseau radio de diminuer un débit binaire d'un flux de file d'attente prioritaire, PQF, associé à une pluralité des trames de données de canal HS-DSCH.

6. Procédé selon la revendication 1, dans lequel, si le délai de mise en mémoire tampon détecté est supérieur à un seuil prédéterminé, alors ladite station de base radio envoie un message, audit contrôleur de réseau radio, ordonnant audit contrôleur de réseau radio de diminuer un débit binaire maximal pour la totalité du trafic HS qui est envoyé sur ladite liaison de transport à ladite station de base radio.

7. Procédé selon la revendication 6, dans lequel ladite station de base radio augmente le débit binaire maximal pour le trafic HS après une période de temps prédéterminée au cours de laquelle des délais de mise en mémoire tampon détectés subséquents n'ont pas dépassé un seuil prédéterminé.

8. Système cellulaire (100) incluant :
un contrôleur de réseau radio (102) ;
une liaison de transport (106) ; et
une station de base radio (104), le système cellulaire étant **caractérisé en ce que** :
ledit contrôleur de réseau radio (102) est configuré de manière à générer une trame de données de canal partagé en liaison descendante haut débit, HS-DSCH, (110), qui inclut une extension de temporisation de référence de délai, DRT, (402) ;
ledit contrôleur de réseau radio (102) est configuré de manière à transmettre la trame de données de canal HS-DSCH (110) sur ladite liaison de transport (106) à ladite station de base radio (104) ;
ladite station de base radio (104) est configurée de manière à recevoir la trame de données de canal HS-DSCH (110) ; et
ladite station de base radio (104) est configurée de manière à utiliser une valeur dans l'extension de temporisation DRT (402) en vue de détecter un délai de mise en mémoire tampon occasionné par des mémoires tampons (107) dans des noeuds de transport (112, 114) situés sur la liaison de transport (106) entre ledit contrôleur de réseau radio (102) et ladite station de base radio (104).

9. Système cellulaire selon la revendication 8, dans lequel ladite extension de temporisation DRT présente une résolution de 1 ms et est dérivée d'un compteur dans ledit contrôleur de réseau radio.

10. Système cellulaire selon la revendication 8, dans lequel ladite station de base radio est configurée de manière à détecter le délai de mise en mémoire tampon en mettant en oeuvre les étapes ci-dessous consistant à :
mesurer (204) une différence entre la valeur dans l'extension de temporisation DRT de la trame de données de canal HS-DSCH et une valeur dans un compteur (115) dans ladite station de base radio lorsque la trame de données de canal HS-DSCH a été reçue par ladite station de base radio ;
collecter (206) une pluralité de différences mesurées précédemment associées à des délais de mise en mémoire tampon relativement courts occasionnés par les mémoires tampons dans les noeuds de transport situés entre ledit contrôleur de réseau radio et ladite station de base radio ; et
comparer (208) la différence mesurée aux différences mesurées précédemment, et si la différence mesurée est plus longue que la différence mesurée précédemment la plus courte plus une limite de délai prédéterminée, alors un drapeau (306) est défini en vue d'indiquer qu'il existe un délai de mise en mémoire tampon problématique sur la liaison de transport entre ledit contrôleur de réseau radio et ladite station de base radio.

11. Système cellulaire selon la revendication 10, dans lequel ladite étape de collecte de la pluralité de différences mesurées précédemment est en outre **caractérisée par** l'étape consistant à abandonner et à ne pas utiliser des différences mesurées précédemment qui ont été obtenues avant un temps prédéterminé, afin d'éviter des problèmes de dérive de phase de noeuds.

12. Système cellulaire selon la revendication 8, dans lequel, si le délai de mise en mémoire tampon détecté est supérieur à un seuil prédéterminé, alors ladite station de base radio envoie un message, audit contrôleur de réseau radio, ordonnant audit contrôleur de réseau radio de diminuer un débit binaire d'un flux de file d'attente prioritaire, PQF, associé à une pluralité des trames de données de canal HS-DSCH.

13. Système cellulaire selon la revendication 8, dans lequel, si le délai de mise en mémoire tampon détecté est supérieur à un seuil prédéterminé, alors ladite station de base radio envoie un message, audit contrôleur de réseau radio, ordonnant audit contrôleur de réseau radio de diminuer un débit binaire maximal pour la totalité du trafic HS qui est envoyé sur ladite liaison de transport à ladite station de base radio.

14. Système cellulaire selon la revendication 13, dans lequel ladite station de base radio est configurée de manière à augmenter le débit binaire maximal pour le trafic HS après une période de temps prédéterminée au cours de laquelle des délais de mise en mémoire tampon détectés subséquents n'ont pas dépassé un seuil prédéterminé.

15. Station de base radio (104), **caractérisée par** :
un mécanisme de commande de flux (108) qui est configuré de manière à recevoir une trame de données de canal partagé en liaison descendante haut débit, HS-DSCH, (110), générée et transmise par un contrôleur de réseau radio (102), la trame de données de canal HS-DSCH (110) incluant une extension de temporisation de référence de délai, DRT, (402), et à utiliser ensuite une valeur dans l'extension de temporisation DRT (402) en vue de détecter un délai de mise en mémoire tampon occasionné par des mémoires tampons (107) dans des noeuds de transport (112, 114) situés sur la liaison de transport (106) entre ledit contrôleur de réseau radio (102) et ladite station de base radio (104).

16. Station de base radio selon la revendication 15, dans laquelle ledit mécanisme de commande de flux est configuré de manière à détecter le délai de mise en mémoire tampon en mettant en oeuvre les étapes ci-dessous consistant à :
mesurer (204) une différence entre la valeur dans l'extension de temporisation DRT de la trame de données de canal HS-DSCH et une valeur dans un compteur (115) lorsque la trame de données de canal HS-DSCH a été reçue ;
collecter (206) une pluralité de différences mesurées précédemment associées à des délais de mise en mémoire tampon relativement courts occasionnés par des mémoires tampons (107) dans des noeuds de transport (112 et 114) situés dans le réseau de transport; et
comparer (208) la différence mesurée aux différences mesurées précédemment, et si la différence mesurée est plus longue que la différence mesurée précédemment la plus courte plus une limite de délai prédéterminée, alors un drapeau (306) est défini en vue d'indiquer qu'il existe un délai de mise en mémoire tampon problématique au sein du réseau de transport.

17. Station de base radio selon la revendication 15, dans laquelle ledit mécanisme de commande de flux, lors de l'étape de collecte des différences mesurées précédemment, est configuré de manière à abandonner et à ne pas utiliser des différences mesurées précédemment qui ont été obtenues avant un temps prédéterminé, afin d'éviter des problèmes de dérive de phase de noeuds.

18. Station de base radio selon la revendication 15, dans laquelle, si le délai de mise en mémoire tampon détecté est supérieur à un seuil prédéterminé, ledit mécanisme de commande de flux envoie un message, à un contrôleur de réseau radio (102), ordonnant audit contrôleur de réseau radio de diminuer un débit binaire d'un flux de file d'attente prioritaire, PQF, associé à une pluralité des trames de données de canal HS-DSCH.

19. Station de base radio selon la revendication 15, dans laquelle, si le délai de mise en mémoire tampon détecté est supérieur à un seuil prédéterminé, ledit mécanisme de commande de flux envoie un message, à un contrôleur de réseau radio (102), ordonnant audit contrôleur de réseau radio de diminuer un débit binaire maximal pour la totalité du trafic HS qui est envoyé sur une liaison de transport (106) audit mécanisme de commande de flux.

20. Station de base radio selon la revendication 19, dans laquelle ledit mécanisme de commande de flux est configuré de manière à augmenter le débit binaire maximal pour le trafic HS après une période de temps prédéterminée au cours de laquelle des délais de mise en mémoire tampon détectés subséquents n'ont pas dépassé un seuil prédéterminé.

21. Contrôleur de réseau radio (102), **caractérisé par** :
un mécanisme de commande de flux (108) qui est configuré de manière à générer une trame de données de canal partagé en liaison descendante haut débit, HS-DSCH, (110), qui inclut une extension de temporisation de référence de délai, DRT, (402), et à transmettre la trame de données de canal HS-DSCH à une station de base radio (104), moyennant quoi l'utilisation d'une valeur dans l'extension de temporisation DRT introduite dans le canal HS-DSCH par le contrôleur de réseau radio (102) permet à la station de base radio (104) de détecter un délai de mise en mémoire tampon occasionné par des mémoires tampons (107) dans des noeuds de transport (112, 114) situés sur une liaison de transport (106) entre le contrôleur de réseau radio (102) et la station de base radio (104).

22. Contrôleur de réseau radio selon la revendication 21, dans lequel ledit mécanisme de commande de flux est configuré de manière à ajouter l'extension de temporisation DRT uniquement à une partie des trames de données de canal HS-DSCH générées.

23. Contrôleur de réseau radio selon la revendication 21, dans lequel ladite extension de temporisation DRT présente une résolution de 1 ms, et est dérivée d'un compteur interne (111).
